# EUROPEAN PATENT APPLICATION

(11) **EP 4 481 992 A1**
(43) Date of publication of application: **25.12.2024**
(21) Application number: 23180821.3
(22) Date of filing: 22.06.2023
(51) Int. Cl.: H02K 1/20, H02K 5/20, H02K 9/04, H02K 11/25

(54) **AN ELECTRIC MACHINE AND COOLING SYSTEM THEREOF**

(71) Applicant: Polestar Performance AB, 405 31 Gothenburg (SE)
(72) Inventor: STENVALL, Lars, 459 93 Ljungskile (SE); WHITE, Kevin, SA15 4LH Llanelli (GB)
(74) Representative: Zacco Sweden AB

(57) **Abstract**

The present disclosure relates to methods, systems, an electric machine (EM), a vehicle and a computer-readable storage medium and a computer program product. The EM comprises a housing and a stator unit and a rotor unit arranged therein and supported by the housing. The direct internal cooling system for the EM comprises an external cooling means configured for regulating an operational temperature of the one or more internal parts of the EM. The external cooling means is arranged separately from the EM and proximal to the housing of the EM, and is further configured for delivering a coolant comprising a cooling airflow to the EM and thereby regulating the operational temperature of the one or more internal parts of the EM.

## Description

### TECHNICAL FIELD

The disclosed technology relates to electric machines and methods and cooling systems for regulating an operating temperature of one or more internal parts of electric machines. In particular, but not exclusively the aspects and embodiments of the disclosed technology relate to a direct internal cooling system for regulating and maintaining an optimal operating temperature of the electric machine configured to be operable as an automotive electric machine comprised in a vehicle. Further embodiments and aspects relate to the electric machine and a vehicle comprising the electric machine and the cooling system.

### BACKGROUND

The transport sector accounts for high greenhouse gas emissions globally and is therefore considered to be a major source of air pollution. To address the issue of climate change and enhance energy security, the key is to bring about a fundamental shift from the fossil-fuel dependent vehicles to electric vehicles (EVs) in the market. The vehicles that are electrically-powered completely can significantly contribute to reducing fossil fuel dependence and consequently reduction of greenhouse gas emissions. A rotary electric motor used in electric vehicles typically consists of several structural components and operates based on the principles of electromagnetism. The rapid transition from combustion-driven land transport to electrically driven vehicles necessitates not only the cleanliness of the electric energy itself but also the environmental impact and manufacturing practices associated with the materials and methods employed. In the design of the electric drivetrain, there exists a range of alternative solutions concerning the selection of materials and cooling techniques. Crucial factors in this decision-making process include the choice of magnetic materials (such as iron alloys), conductor materials (copper or aluminum), and magnetization methods (electrical or permanent-based). These choices involve intricate trade-offs wherein cost, environmental impact, security of supply, and system efficiency are interconnected, rendering the decision-making process complex. Cooling systems play a vital role in maintaining optimal operating temperatures and ensuring the efficient and reliable performance of electric motor components. Efficiently designed cooling systems ultimately enable the realization of smaller machines, leading to reduced material consumption across the board. Therefore, an optimal design for the drivetrain must be approached from a systemic perspective, taking into account not only material and manufacturing costs but also operational expenses.

The existing traction systems in full-electric vehicles (FEVs) predominantly utilize permanently magnetized synchronous machines (PMSM), as well as electrically magnetized synchronous machines (EMSM), permanent magnet-assisted synchronous reluctance machines (PMaSRM), and induction machines (IM), all employing copper as the primary winding material. Cooling solutions for these systems typically involve stator housing cooled with liquid cooling systems such as oil or water/glycol, often supplemented with oil cooling for the end windings.

The current state-of-the-art cooling system for electric motors usually involves the circulation of oil inside the stator and rotor. Additionally, oil may be sprayed onto the stator end windings for cooling purposes. The heated oil is then circulated through a filter and directed to an oil-water heat exchanger to dissipate the generated heat. Subsequently, the heated water is pumped through hoses and pipes to the front of the vehicle, where it undergoes another phase of heat dissipation in a water-air heat exchanger, transferring heat to the outside air.

However, this complex cooling arrangement, involving multiple circulation systems, different cooling media, heat exchangers, pumps, pipes, and tubes, results in increased costs, added weight, complexity, and does not align well with sustainability objectives.

There is thus a need in the art for novel and improved solutions and applications involving advanced cooling systems for addressing the mentioned problems and improving the efficiency and sustainability of electric machines.

### SUMMARY

The herein disclosed technology seeks to mitigate, alleviate or eliminate one or more of the above-identified deficiencies and disadvantages in the prior art to address various problems relating to thermal management in the electric machines, specifically the electric machines adapted for automotive purposes.

Various aspects and embodiments of the disclosed invention are defined below and in the accompanying independent and dependent claims. More specifically, the various aspects and embodiments herein relate to a direct internal cooling system, an electric machine, a vehicle comprising the electric machine and the internal cooling system, a method for direct cooling of the electrical machine and a computer-implemented method for controlling an operation of the direct internal cooling system. Further aspects comprise a computer-readable storage medium and a computer program product comprising instructions for controlling operation of the direct internal cooling system. The term exemplary is in the present context to be understood as serving as an instance, example or illustration.

According to a first aspect of the present disclosure there is provided a direct internal cooling system for an electric machine (EM). The EM comprises a housing and a stator unit and a rotor unit arranged therein and supported by the housing. The stator comprises one or more ducts extending at least partly through a longitudinal extension of the stator unit in order to create one or more corresponding coolant pathways that traverse the longitudinal extension of the stator unit. The one or more coolant pathways are configured to be in direct thermal communication with one or more internal parts of the EM. The EM further comprises one or more coolant inlet vents arranged at a surface of an end portion of the stator unit, wherein each coolant inlet vent is associated with a respective coolant pathway. The direct internal cooling system comprises an external cooling means configured for regulating an operational temperature of the one or more internal parts of the EM. The external cooling means is arranged separately from the EM and proximal to the housing of the EM. The external cooling means is further configured for delivering a coolant comprising a cooling airflow to the one or more coolant pathways via corresponding one or more coolant inlet vents and thereby regulating the operational temperature of the one or more internal parts of the EM.

In several exemplary embodiments, the direct internal cooling system may further comprise a divider unit arranged at the end portion of the stator unit coinciding with an end portion of stator windings of the stator unit protruding from the end portion of the stator unit. The divider unit may be configured for guiding the coolant into the one or more inlet air vents. The divider unit may comprise one or more apertures arranged thereto for allowing passage of a portion of the coolant. In several embodiments, the divider unit may be a ring-shaped divider unit arranged circumferentially around the end potion of stator windings of the stator unit. The ring-shaped divider unit may comprise one or more apertures arranged around a circumference of the ring-shaped divider unit configured for allowing passage of a portion of the coolant through the one or more apertures of the ring-shaped divider unit.

In several exemplary embodiments, the external cooling means may comprise one or more components comprising an external cooling fan and an external water injector module. The external water injector module may be arranged separately from and proximal to the housing of the EM and the external cooling fan. The cooling fan may be configured for extracting cooling air from an external environment located remotely from the immediate vicinity of the EM for delivering the cooling airflow to the one or more respective coolant pathways. The external water injector module may be configured to inject a cooling water mist directly into the cooling airflow provided by the external cooling fan, such that the cooling airflow is mixed, prior to entering into the one or more coolant inlet vents, with the injected water mist for producing a cooling aerosol. The external cooling fan may be further configured for delivering the coolant comprising the cooling aerosol to the one or more respective coolant pathways via the one or more respective coolant inlet vents.

In several exemplary embodiments, the EM may be an automotive EM comprised in a vehicle. The cooling system may further be configured to replenish cooling air or cooling water by recovering and/or recycling the cooling air or the cooling water from a climate system infrastructure of the vehicle comprising the EM. The cooling system may further comprise a designated water container for storing the replenished cooling water. In several exemplary embodiments, cooling water for producing the cooling water mist may be deionized water.

In several exemplary embodiments, the cooling system may further comprise a temperature sensor device configured to obtain one or more internal temperature measurements of the one or more internal parts of the EM. The system may further comprise processing circuitry configured for controlling operation of the external cooling means for delivery of the coolant to the one or more air inlet vents.

In several exemplary embodiments, the processing circuitry may be further configured to obtain sensor data, from the temperature sensor device and/or from one or more other sensor devices comprised in the EM, indicative of an operational temperature of the one or more internal parts of the EM. The processing circuitry may further be configured to determine, based on the obtained sensor data, if the operational temperature of the one or more internal parts of the EM exceeds a first or second temperature threshold value. In response to determining that the operational temperature of the one or more internal parts of the EM has exceeded the first or second temperature threshold value, the processing circuitry may be further configured to transmit a control signal to the external cooling means for adjusting an operation of the external cooling means by actuating a corresponding component of the external cooling means. In some embodiments, the corresponding component of the external cooling means may be the external cooling fan and/or the external water injector module.

In several exemplary embodiments, the processing circuitry may be further configured to actuate the external water injector module to inject the cooling water mist directly into the cooling airflow in response to determining that the operational temperature of the one or more internal parts of the EM has exceeded the second temperature threshold value.

According to a second aspect of the present disclosure there is provided a method for direct internal cooling of an electric machine (EM). The EM comprises a housing and a stator unit and a rotor unit arranged therein and supported by the housing. The method comprises providing one or more ducts extending at least partly through a longitudinal extension of the stator unit in order to create one or more corresponding coolant pathways that traverse the longitudinal extension of the stator unit. The one or more coolant pathways are configured to be in direct thermal communication with one or more internal parts of the EM. The method further comprises providing one or more coolant inlet vents at a surface of an end portion of the stator unit; wherein each coolant inlet vent is associated with a respective coolant pathway. Further, the method comprises providing an external cooling means arranged separately from the EM and proximal to the housing of the EM. The method further comprises delivering, by means of the external cooling means, a coolant comprising a cooling airflow to the one or more coolant pathways via corresponding one or more coolant inlet vents. Further, the method comprises regulating an operational temperature of one or more internal parts of the EM.

In several exemplary embodiments, the external cooling means may comprise one or more components comprising an external cooling fan and an external water injector module. The method may comprise arranging the external water injector module separately from and proximal to the housing of the EM and the external cooling fan. The method may further comprise extracting, by means of the cooling fan, cooling air from an external environment located remotely from the immediate vicinity of the EM for delivering the cooling airflow to the one or more coolant pathways via corresponding one or more coolant inlet vents. The method may further comprise injecting, by means of the external water injector, a cooling water mist directly into the cooling airflow provided by the external cooling fan. The method may further comprise mixing the cooling airflow with the injected water mist for producing a cooling aerosol prior to entering into the one or more coolant inlet vents. The method may further comprise delivering, by means of the external cooling fan, the coolant comprising the cooling aerosol to the one or more respective coolant pathways via the one or more respective coolant inlet vents.

The present inventor has realized that through careful design and optimization, an improved air-cooling system can be realized which is capable of effectively regulating an operational temperature of the internal EM components, as well as ensuring even internal cooling and regulation of operating temperature of the EM components. Further, the proposed solution herein relieves the requirements of installation of pipes, heat exchangers, and other components of the liquid cooling systems and thus lowers the weight and productions costs of the EMs. The proposed EM design and the cooling system reduces the overall footprint of the EM e.g. by reducing the size of the housing enclosure, and improves the efficiency and performance of the EM by delivering optimized thermal management. The proposed cooling system's effectiveness prevents EM from overheating, is expected to improve component longevity, ensures that the EM operates within its safe operating temperature range and improves the EM sustainability.

The present inventor has thus devised systems and methods for providing direct cooling techniques for regulating operational temperature of the internal parts and components of the EM including the stator and rotor unit windings, stator and rotor unit lamination plates, rotor magnets e.g. in case of PM-machines and rotor rectifier cooling in case of EMSM-machines, etc.

According to a third aspect of the present disclosure there is provided a computer-implemented method for controlling an operation of a direct internal cooling system as disclosed according to various embodiments of the first aspect herein. of an electric machine (EM). The direct internal cooling system comprising an external cooling means arranged separately from the EM and proximal to the housing of the EM and configured for regulating an operational temperature of one or more internal parts of the EM. The method comprises obtaining sensor data from one or more sensor devices, the sensor data being indicative of an operational temperature of the one or more internal parts of the EM. The method further comprises determining, based on the obtained sensor data, if the operational temperature exceeds a first or second temperature threshold value. In response to determining that the operational temperature of the one or more internal parts of the EM has exceeded the first or second temperature threshold value, the method further comprises transmitting a control signal to the external cooling means for adjusting an operation of the external cooling means by actuating a corresponding component of the external cooling means.

In several embodiments, the external cooling means may comprise one or more components comprising an external cooling fan and an external water injector module. In response to determining that the operational temperature of the one or more internal parts of the EM has exceeded the first temperature threshold value, the method may further comprise actuating the external cooling fan for delivering a coolant comprising a cooling airflow to one or more coolant pathways comprised in the stator unit and configured to be in direct thermal communication with one or more internal parts of the EM.

In several embodiments, in response to determining that the operational temperature of the one or more internal parts of the EM has exceeded the second temperature threshold value, the method may further comprise actuating the external water injector module to inject a cooling water mist directly into the cooling airflow provided by the external cooling fan.

According to a fourth aspect of the present disclosure there is provided a computer-readable storage medium comprising instructions which, when executed by one or more processors of a computing device of a direct internal cooling system, causes the computing device to carry out the method according to several embodiments of the method of the third aspect disclosed herein.

According to a fifth aspect of the present disclosure there is provided a computer program product comprising instructions which, when the program is executed by one or more processors of a computing device of a direct internal cooling system, causes the computing device to carry out the method according to several embodiments of the method of the third aspect disclosed herein.

According to a sixth aspect of the present disclosure there is provided an electric machine (EM) comprising a housing and a stator unit and a rotor unit arranged therein and supported by the housing. The stator unit comprises one or more ducts extending at least partly through a longitudinal extension of the stator unit in order to create one or more corresponding coolant pathways that traverse the longitudinal extension of the stator unit. The one or more coolant pathways are configured to be in direct thermal communication with one or more internal parts of the EM. The stator unit further comprises one or more coolant inlet vents arranged at a surface of an end portion of the stator unit, wherein each coolant inlet vent is associated with a respective coolant pathway. The one or more coolant pathways are further configured for receiving a coolant comprising a cooling airflow delivered to the one or more coolant pathways via corresponding one or more coolant inlet vents.

In several embodiments, at least one duct of the one or more ducts extending at least partly through the longitudinal extension of the stator unit may further comprise a plurality of fins arranged thereto, wherein the plurality of fins are configured for providing conductive heat transfer.

In several embodiments, the rotor unit may comprise one or more ducts extending at least partly through a longitudinal extension of the rotor unit in order to create one or more corresponding coolant pathways that traverse the longitudinal extension of the rotor unit. The one or more coolant pathways of the rotor unit may be configured to be in direct thermal communication with the one or more internal parts of the EM.

According to a seventh aspect of the present disclosure there is provided a vehicle comprising a direct internal cooling system according to any one of the embodiments of the first aspect and an electric machine (EM) according to any one of the embodiments of the sixth aspect as disclosed herein.

Further embodiments of the different aspects are defined in the dependent claims.

It is to be noted that all the embodiments, elements, features and advantages associated with the first aspect also analogously apply to the second, third, fourth, fifth, sixth, and the seventh aspects of the present disclosure.

These and other features and advantages of the present disclosure will in the following be further clarified in the following detailed description.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings. The drawings are not to scale.
Fig. 1a illustrates a schematic perspective view of an electric machine in accordance with several embodiments of the present disclosure.
Fig. 1b shows a schematic cross-sectional front view of a lamination plate of a stator unit of the electric machine in accordance with several embodiments of the present disclosure.
Fig. 1c illustrates a schematic perspective view of the electric machine in accordance with several embodiments of the present disclosure.
Fig. 2 shows a schematic cross-sectional side view of various components of the electric machine in accordance with several embodiments of the present disclosure.
Fig. 3 shows a schematic block diagram of a control system in accordance with some embodiments of the present disclosure.
Fig. 4 shows a schematic flowchart illustrating a method in accordance with several embodiments of the present disclosure.
Fig. 5 shows a schematic flowchart illustrating a computer-implemented method in accordance with several embodiments of the present disclosure.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that at least some of the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, at least some embodiments and aspects of the method may be embodied in an apparatus comprising one or more processors, one or more memories coupled to the one or more processors, where computer code is loaded to implement the method. For example, the one or more memories may store one or more computer programs that perform some of the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth. As used herein, the term "if" may be construed to mean "when or "upon" or "in an instance of" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

The following description may use terms such as "top", "bottom", "inner", "outer", "internal", "external", "side", "edge", "boundary", "ridge", "distal", "proximal", "front", "back" etc. These terms generally refer to the views, spatial positions and orientations of elements and features as shown in the drawings. The terms are used for the reader's convenience only and shall not be construed as limiting.

In the following description of exemplary embodiments, the same reference numerals denote the same or similar components.

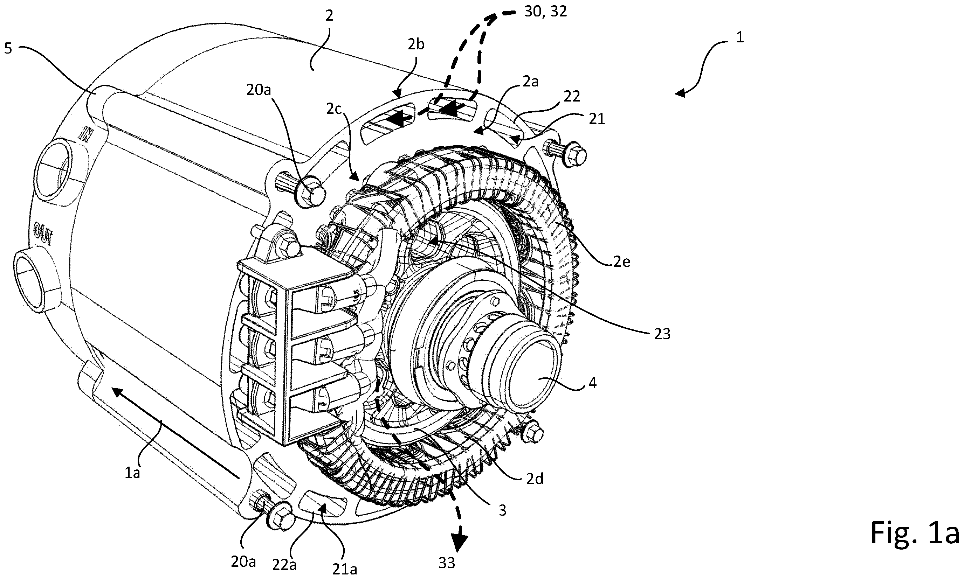

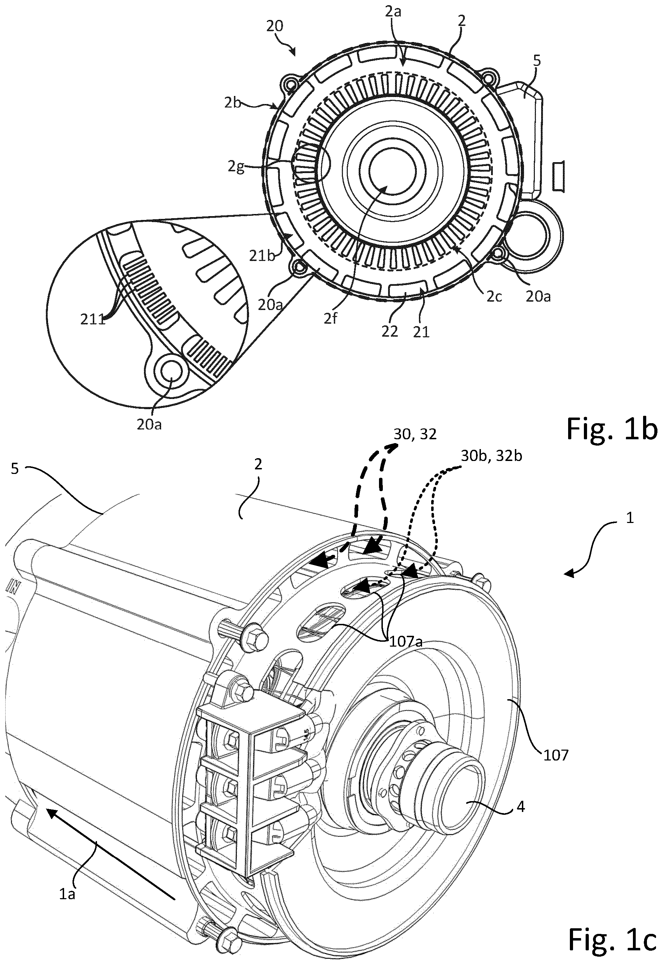

Fig. 1a illustrates a schematic perspective view of an electric machine 1 in accordance with several embodiments and aspects herein. The electric machine (EM) may interchangeably be referred to as an electric motor throughout this description. In several embodiments, the EM may be an automotive EM comprised in a vehicle such as an EV. A rotary electric motor 1 typically comprises several structural components and operates based on the principles of electromagnetism. The motor is designed to convert electrical energy into mechanical energy. The components of the rotary electric motor 1 are shown in Fig. 1a for the proposed EM according to this disclosure. The stator unit 2, which is the stationary part of the motor, generates a rotating magnetic field. It is usually constructed using stacked laminations 20 as e.g. illustrated in Fig. 1b made of high-permeability magnetic material like iron or steel. The stator windings 2d, usually made of copper, are evenly spaced coils connected to an external power source. When electrical power is supplied to the stator windings, they create the magnetic field necessary for motor operation.

In terms of materials in the stator, copper is the most commonly used material due to its lower resistivity. However, copper reserves are limited and expected to be depleted sooner or later, making this material to be expensive and with an unstable price. Aluminum (AL) resources, on the contrary, are much more stable due to the fact that AL is the third most abundant element of the Earth's crust, along with the fact that it is one of the most cost-effective metals to recycle. Aluminum-wound machines typically weight lesser than the copper windings machines having the same or better efficiency. Aluminum windings are usually found in the lower end traction applications, e.g., in EMs of small transportation vehicles. So far, less efforts have been put on replacing copper windings with aluminum ones for the high end EVs.

Compared to the dominating copper windings, aluminum windings have a drawback of higher resistivity leading to higher conductor losses at low frequency. However, it is known that only at higher speeds and high loads (e.g., acceleration, hill climbing) the increased heat losses in aluminum windings become a noticeable problem. The advanced cooling solutions proposed herein also aim at solving this problem and thus enabling applications of the high-performance electric traction motors operating with aluminum windings. The aluminum windings are considered very competitive, from a cost, weight, environmental and sustainability perspectives.

Moving on, the rotor 3, the rotating part of the motor, interacts with the magnetic field generated by the stator. It typically consists of a shaft 4 and conductive bars called rotor windings (not specifically shown) or coils, embedded in a magnetic core. As the magnetic field from the stator rotates, it induces an electric current in the rotor windings, creating a secondary magnetic field. The interaction between the stator and rotor magnetic fields produces electromagnetic torque, causing the rotor to rotate.

The motor is usually housed within an enclosure, otherwise referred to as a housing 5, made of materials like aluminum or cast iron, providing mechanical support and protection from external contaminants. Heat and temperature management is crucial for the motor's performance and longevity. Cooling systems play a vital role in maintaining optimal operating temperatures of various electric motor components thus ensuring efficient and reliable performance of electric motor. Examples of cooling systems commonly designed to cool components of electric motors may include conventional air cooling systems typically including a fan mounted on the rotor shaft or an external fan integrated into the motor enclosure. The fan draws air over the motor components, such as the stator and rotor, to dissipate heat. Other more frequently used cooling systems include liquid cooling systems which may involve circulating a liquid coolant, typically a mixture of water and glycol, through channels or tubes integrated into the motor. The heat from the motor components is transferred to the liquid, which is then cooled by a separate heat exchanger or radiator using air or another cooling medium. In a liquid-to-liquid cooling a liquid coolant circulates through the motor's cooling channels and transfers heat to another liquid coolant in a separate heat exchanger. The secondary liquid is then cooled by an external cooling system, such as a radiator or chiller.

As mentioned earlier, the conventional liquid cooling systems have drawbacks contributing to complexity and overall cost of the cooling systems. The conventional air cooling systems for electric motors also have several drawbacks. Firstly, they have limited cooling capacity compared to liquid cooling systems. Air has a lower heat transfer coefficient, making it less efficient at removing heat from motor components. Additionally, conventional air cooling systems may deliver uneven cooling to different components, leading to hotspots and temperature variations within the motor. Thus traditional air cooling systems have demonstrated poor performance, efficiency, and lifespan compared to the mainstream liquid cooling systems.

The heat in the EM is usually generated in the coils, stator and rotor laminations and conventionally dissipated through methods using convection heat exchange in the housing of the EM. The problem of temperature regulation is particularly challenging for the rotor, as the rotor is usually isolated from the housing by an insulating air gap. Therefore, the rotor is often cooled using a hollow shaft in which a coolant path is provided. Housing and shaft cooling methods are indirect approaches to dissipate heat generated inside the cores i.e. internal parts of the EM. In these approaches, a large thermal contact resistance may seriously reduce the cooling performance. Therefore, it is desirable to design a direct cooling approach in which the cooling channels or pathways are in direct contact with the heat sources i.e. the internal parts of the EM. The present inventor has realized that through careful design and optimization, an improved air-cooling system can be realized which is capable of effectively regulating an operational temperature of the internal EM components, as well as ensuring even internal cooling and regulation of operating temperature of the EM components. Further, the proposed solution herein relieves the requirements of installation of pipes, heat exchangers, and other components of the liquid cooling systems and thus lowers the weight and productions costs of the EMs. The proposed EM design and the cooling system reduces the overall footprint of the EM e.g. by reducing the size of the housing enclosure, and improves the efficiency and performance of the EM by delivering optimized thermal management. The proposed cooling system's effectiveness prevents EM from overheating, is expected to improve component longevity, ensures that the EM operates within its safe operating temperature range and improves the EM sustainability.

The present inventor has thus devised systems and methods for providing direct cooling techniques for regulating operational temperature of the internal parts and components of the EM including the stator and rotor unit windings, stator and rotor unit lamination plates, rotor magnets e.g. in case of PM-machines and rotor rectifier cooling in case of EMSM-machines, etc.

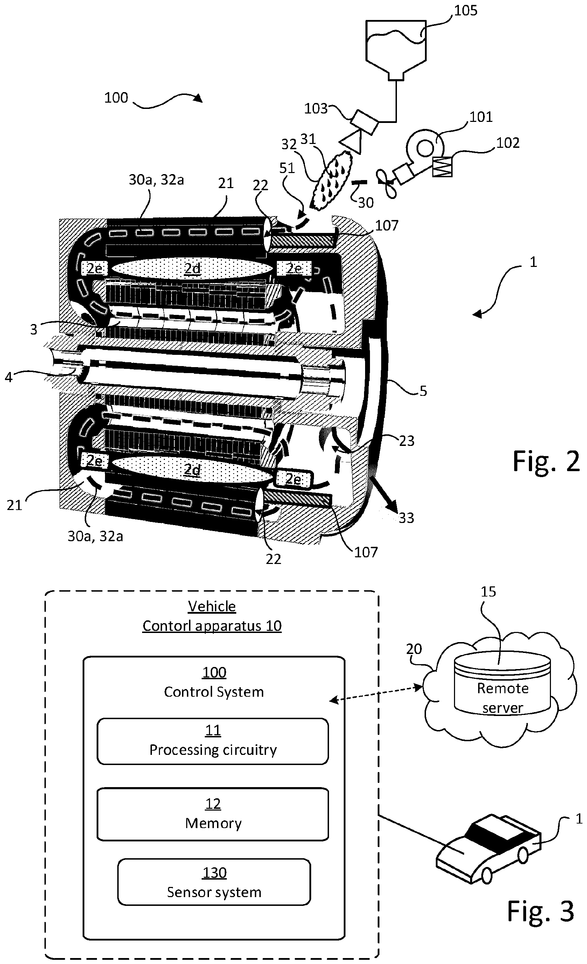

Accordingly, in several embodiments there is provided an electric machine, EM, 1 comprising a housing 5 and a stator unit 2 and a rotor unit 3 arranged therein and supported by the housing. The stator unit 2 comprises one or more ducts 21 extending at least partly through a longitudinal extension (arrow 1a) of the stator unit 2 in order to create one or more corresponding coolant pathways 21 that traverse the longitudinal extension 1a of the stator unit 2. The longitudinal extension of the stator unit 2 in the present context is to be understood as the direction coinciding with the longest extension of the elongated body of the EM or otherwise the stator unit. Consequently, a lateral or transverse extension of an element e.g. a transverse extension of the stator unit 2 may be interpreted as the direction coinciding with the extension being substantially transverse the longitudinal extension of the element. The one or more coolant pathways formed in the body of the stator unit 2 are configured to be in direct thermal communication with one or more internal parts of the EM. As explained further below and as shown in the exemplary EM 1 of Fig. 2, the coolant pathways 21 are in direct thermal connection with the heat sources e.g. the windings 2d, 2e of the stator, the stator laminations, and the rotor 3, delivering an inflow of coolant 30, 32 into the interior of the EM. In several embodiments, stator clamping bolts holes 20a as shown in Fig. 1b may be punched straight into lamination plates 20 and also be used to transfer stator torque reactions. End covers, may be bolted directly to the stator, for seating the rotor shaft bearings and supporting the stator and rotor units. This way, the proposed EM design and the cooling system reduces the overall footprint of the EM e.g. by reducing the size of the housing enclosure 5.

The stator unit further comprises one or more coolant inlet vents 22 arranged at a surface of an end portion 2a of the stator unit 2, wherein each coolant inlet vent is associated with a respective coolant pathway. As an example, Fig. 1a shows duct or coolant pathway 21a having a corresponding coolant inlet vent 22a. Coolant pathways may be interpreted in the present context as the channels provided traversing the thickness (longitudinal extension) of the body of the stator unit through its stacked lamination plates. The coolant pathways are configured for conveying a coolant used for cooling the internal parts and components of the EM including the lamination plate stack forming the stator unit. Coolant air inlet vent may be interpreted as the openings at an end portion of a side of each duct or coolant pathways, wherein the opening is configured for allowing passage of the coolant into the coolant duct or pathway. The one or more coolant pathways are further configured for receiving the coolant comprising a cooling airflow delivered to the one or more coolant pathways via corresponding one or more coolant inlet vents. Delivering the coolant or cooling airflow should be construed as directing, blowing, spraying, injecting, or impinging a flow of the coolant such as airflow into the cooling pathways.

The surface of the end portion 2a coincides with an imaginary plane (not shown) out of which an end portion 2e of the stator windings 2d of the stator unit and/or the rotor shaft 4 of the rotor unit 3 protrudes. The surface may be referred to as the outer face of the stator unit 2. For instance in case of a cylindrical stator unit 2 as shown in Fig. 1a, a base portion of the cylinder would correspond to the surface of the end portion 2a. The surface of the end portion 2a comprises an opening 2f as shown in Fig. 1b, out of which the rotor unit 3 and the rotor shaft 4 protrude (i.e. the opening of the stator unit configured to receive the rotor unit therein). The surface of the end portion 2a has an outer edge or boundary 2b and an inner edge or boundary 2c leading up to the opening 2f of the stator unit 2. This is shown in Fig. 1b illustrating a cross sectional front view of the stator depicting the end portion 2a of the stator unit 2. The illustration in Fig. 1b also corresponds to a frontal view an exemplary stator lamination plate. The inner edge 2c of the surface of the end portion 2a in some embodiments leads up to a geometry 2g around the stator windings 2d which may comprise a plurality of fins 2g.

Referring back to Fig. 1a, a coolant inlet vent 22 may thus be interpreted as a perforation or aperture 22, 22a traversing through the surface of the end portion 2a of the stator unit 2 resulting in creation of a discreet opening leading up to the corresponding coolant pathway 21, thus forming a passage from the surface into the interior of the EM for transportation of the coolant. The coolant channels or pathways 21 are designed to guide or direct the flow of the coolant through the internal components of the EM. The perforations 22, 22a can have various shapes, such as circles, squares, rectangles, or the like. The apertures 22, 22a may be distributed evenly or in any other desired pattern around the circumference of the surface of the end portion 2a. As shown in Fig. 1a and 1b, the one or more apertures 22 are distributed evenly around the circumference of the circular base 2a of the cylindrical stator unit 2.

It should be understood that the one or more ducts extending at least partly through the longitudinal extension of the stator unit in order to create one or more corresponding coolant pathways may be manufactured and provided by any means and technologies available in the art. Further, it should be appreciate that by providing the coolant channels e.g. by punching the channels into the stator lamination plates of the stator unit, the one or more corresponding coolant inlet vents at the surface of the end portion of the stator unit may accordingly be created.

In several embodiments, spatial position of the one or more coolant pathways 21 inside the body of the stator unit 2 may be adjusted with respect to the outer 2b or inner 2c boundaries of the body of the stator. In other words, one or more coolant pathways 21 may for instance be arranged close to the inner 2c or outer 2b peripheries of the main body of the stator unit 2. Accordingly, the corresponding one or more coolant inlet vents 22 may be arranged close to an outer periphery 2b of the surface of the end portion 2a of the stator unit 2. In several embodiments, the one or more coolant inlet vents 22 may be arranged close to an inner periphery 2c of the surface of the end portion 2a (i.e. closer to the end portion 2e of the stator windings 2d) of the stator unit 2.

By arranging the one or more coolant pathways 21 at certain distances from the peripheries 2b, 2c of the body of the stator unit 2, flux of electromagnetic filed above the coolant channels 21 can be controlled. For instance, moving the one or more coolant channels 21 towards the inner periphery 2c and closer to the end portion 2e of the windings 2d may increase the flux above the coolant channels for achieving reduced magnetic iron losses and higher overall efficiency of the EM 1.

In some embodiments, one or more housing coolant inlets such as the exemplary inlet 51 in Fig. 2 may be arranged and distributed on the body of the housing 5 in order to allow for the flow of coolant into the inner space of the housing 5 and into the one or more coolant inlet vents 22. In some embodiments, each coolant inlet vent 22 may be associated with a corresponding housing coolant inlet 51. In some embodiments however, there may not be a one-to-one correspondence in the number of housing coolant inlets 51 and the one or more coolant inlet vents 22. In several embodiments, as for the example of the housing 5 being constructed by the bolted end covers directly to the stator lamination plates 20 explained previously, the exemplary housing coolant inlets 51 may not be required. Accordingly, the EM may interface its surrounding environment directly by the stator unit 2, and the flow of coolant be delivered directly into the one or more coolant inlet vents 22.

In several embodiments as shown in the exemplary Fig. 1b, at least one duct 21b of the one or more ducts 21 extending at least partly through the longitudinal extension of the stator unit 2 may further comprise a plurality of fins 211 arranged thereto, wherein the plurality of fins 211 are configured for providing an improved conductive heat transfer within the ducts 21b. It should be clear to the skilled person that even though in Fig. 1b only the surface of the end portion 2a of the body of the stator unit 2 is depicted for simplicity, this cross sectional view of the lamination plate 20 also applies to each of the plurality of stacked lamination plates collectively forming the body of the stator unit 2.

In several embodiments presented herein, the stator and/or rotor windings may be made of copper or aluminum. However, embodiments and aspects of the presented technology including the aforementioned advantageous design of the EM enable development of a direct internal cooling system, which will be described in more detail in the following. The development and implementation of the advantageous direct internal cooling system according to the present disclosure paves the way for development of sustainable traction systems in EVs, which may employ aluminum windings instead of copper windings for achieving flat wire (hairpin) winding architectures. Even though the hairpin windings made of copper may also be used with the presented technology, it is known that traction machines with aluminum windings can be lighter, cheaper and have the same drive cycle efficiency as one based on copper material. Accordingly, with the proposed direct internal cooling system herein, in which the coolant is in direct contact with the internal heat sources, aluminum hairpin solutions can be effectively realized.

Fig. 2 illustrates a cross-sectional side view of the EM 1 including the bearing housing 5 and depicting some of the internal components of the EM 1 such as the stator windings 2d, protruding ends 2e of the stator windings 2d, and the rotor unit 3. Fig. 2 also illustrates an example direct internal cooling system 100 for the electric machine 1 according to several embodiment and aspects herein. The direct internal cooling system 100 may also be referred to as the control system 100 as shown in the block diagram of Fig. 3. The stator 2 comprises one or more ducts 21 extending at least partly through a longitudinal extension (similar to the direction of the arrow 1a in Fig. 1a) of the stator unit 2 in order to create one or more corresponding coolant pathways 21 that traverse the longitudinal extension of the stator unit 2. The one or more coolant pathways 21 are configured to be in direct thermal communication with one or more internal parts of the EM 1. One or more coolant inlet vents 22 are arranged at the surface of the end portion 2a of the stator unit 2. Each coolant inlet vent 22 is associated with a respective coolant pathway 21. The direct internal cooling system 100 comprises an external cooling means configured for regulating an operational temperature of the one or more internal parts of the EM. The external cooling means is arranged separately from the EM and proximal to the housing of the EM, and is further configured for delivering a coolant comprising a cooling airflow 30 (shown by arrow 30 in Fig. 1a and Fig. 2) to the one or more coolant pathways 21 via corresponding one or more coolant inlet vents 22.

The direct internal cooling system 100 thereby is configured for regulating the operational temperature of the one or more internal parts of the EM. In several embodiments, the external cooling means may comprise one or more components comprising an external cooling fan 101 and an external water injector module 103. The cooling fan 101 may be any fan known in the art such as a propeller fan or a centrifugal fan dimensioned for operating according to the presented solutions herein.

The external water injector module 103 is arranged separately from and proximal to the housing 5 of the EM 1 and the external cooling fan 101. In several embodiments, an air filter 102 may be provided for the cooling fan 101 in order to minimize risk of contamination inside the EM as well as preventing external objects and debris from entering into the EM. In several embodiments, the cooling fan may be configured for extracting cooling air from an external environment located remotely from the immediate vicinity of the EM for delivering the cooling airflow 30 to the one or more respective coolant pathways 21. In some embodiments, an external channel (not shown) may be devised to be in communication with the cooling fan 101 and the external environment for delivering fresh air to the cooling fan 101. In several embodiments, the external water injector module 103 may be configured to inject a cooling water mist 31 directly into the cooling airflow 30 provided by the external cooling fan 101, such that the cooling airflow is mixed, prior to entering into the one or more coolant inlet vents 22, with the injected water mist for producing a cooling aerosol 32. (exemplary cloud-shaped aerosol 32 is shown in Fig. 2 for illustration purposes) An advantage of mixing the cooling airflow 30 and the cooling water mist 31 outside the housing 5 and creating the aerosol 32 prior to entering the one or more coolant inlet vents 22 is that the air/water mix has enough time to be properly and evenly mixed before entering the interior of the housing of the EM. In contrast creating the aerosol inside the interior of the EM may have the drawback of the poor mixing of the water mist with the airflow entering the interior of the EM from different pathways, thus delivering a poor cooling effect in comparison with the external mixing. The external cooling fan 101 may further be configured for delivering the coolant comprising the cooling aerosol 32 to the one or more respective coolant pathways 21 via the one or more respective coolant inlet vents 22.

Fig. 2 further illustrates the flow path 30a, 32a of the coolant inside the exemplary coolant pathway 21 in the interior of the EM, the exemplary coolant inlet vent 22, and the corresponding coolant inlet 51 of the housing 5 allowing the passage of the coolant 30, 32 from the outside of the housing of the EM into the coolant pathway 21.

By introducing airflow 30 (coolant flow 30, 32) into the designed ventilation slots i.e. the coolant pathways traversing the lamination plates of the body of the stator unit 2, and/or introducing coolant flow into channels inside the winding turns, the generated heat in these components is effectively dissipated by forced convection and is exhausted to the ambient surroundings. The external cooling fan 101, is advantageously arranged to be physically and operationally independent from the motor and its operation conditions, thus facilitating high torque and power levels by providing an adequate cooling air. Furthermore, the cooling fan 101 of the cooling system 100 is enabled to be installed and/or removed on demand, e.g. for maintenance purposes without the need for dismantling the entire electric motor. Moreover, one or more cooling fans having different dimensions may be installed in the cooling system 100 depending on the specific operational expectations and output capacity of different EMs. In the proposed solution, the cooling pathways 21 are directly inside the stator and rotor lamination plates and/or the windings, thus the thermal resistance between the core components and the coolant is significantly reduced. Accordingly, in several embodiments the rotor unit 3 may also comprise one or more ducts extending at least partly through a longitudinal extension of the rotor unit in order to create one or more corresponding coolant pathways (not specifically shown) that traverse the longitudinal extension of the rotor unit. The longitudinal extension of the rotor unit follows the longitudinal extension 1a of the stator unit 2. Similar to the stator cooling pathways, the one or more coolant pathways of the rotor unit 3 may be configured to be in direct thermal communication with one or more internal parts e.g. stator and rotor lamination plates and/or the windings of the EM as mentioned above. In some embodiments, one or more coolant inlet vents (not shown) may be arranged at a surface of an end portion of the rotor unit wherein each coolant inlet vent may be associated with a respective coolant pathway or the rotor unit.

In several embodiments, the coolant flow 30a, 32a (dashed arrow line) inside the EM initially passes through the stator windings via the stator cooling pathways, and later circulate through the rotor windings via the rotor cooling pathways to be exhausted out of the EM through exhaust openings 23 devised in the rotor unit 3 as shown also in Fig. 1a and Fig. 2. This way circulating inflow-outflow pathways for the coolant inside the EM is provided. Additionally or alternatively, the coolant flow 30a, 32a may path through the stator unit and the rotor unit at the same time and be exhausted out of the exhaust outlets 23.

Even further, in several embodiments, respective exhaust outlets (not specifically shown) may be devised for the stator unit and the rotor unit respectively. In other words, the inflow of the coolant 30, 32 may be exhausted from dedicated stator exhaust outlets, and/or from rotor outlets. Even though the drawings show that inflow of the coolant 30, 32 and exhaust outflow 33 are entering and exiting the EM at the same side of the EM i.e. the side of the end portion 2a of the stator unit 2, in some embodiments the exhaust outlets for the stator and/or rotor e.g. exhaust outlet 23 may be arranged at the other end portion (not specifically shown) of the EM 1. The other end portion may e.g. be the end portion of the EM 1 being opposite to the end portion 2a. This way, crosswise inflow-outflow pathways for the coolant inside the EM will be provided.

In some embodiments, the exhaust outflow 33 (shown with the arrow 33) may be reused for heating the passenger compartment of the vehicle in cold climates. In some exemplary embodiments, the dry exhaust outflow 33 i.e. when no water mist had been injected for temperature regulation of EM, may be used for heating the vehicle cabin and passenger compartment.

The external cooling fan 101 is dimensioned to be able to deliver the cooling airflow 30 from the external environment and effectively achieve the internal cooling and operation temperature regulation effect for the internal components of the EM, thanks to the specific design of the coolant pathways 21 and direct thermal communication with the heat sources as mentioned above.

In some embodiments, for instance under high load conditions e.g. during heavy acceleration or hill climbing for a high-performance automotive electric traction motor, heat removal capacity of the cooling airflow alone may not be sufficient for achieving the optimal operational temperatures of the internal EM components. Accordingly, the direct internal cooling system 100 is advantageously equipped with the water injection system 103 as explained earlier. At high operating temperatures, the water aerosol 32 or water mist 31 mixed into the air stream will be evaporated inside the EM, thus removing a large amount of heat from the internal components of the EM. To achieve the maximum cooling performance, the water injection quantity can be optimized and used at temperatures above condensation points in the cooling ducts 21.

Accordingly, in several embodiments the direct internal cooling system 100 may further comprise a temperature sensor device configured to obtain one or more internal temperature measurements of the one or more internal parts of the EM. This way the internal temperature data can be obtained and acted upon in order to regulate the optimum operational temperature of the one or more internal parts of the EM. The temperature sensor device may be comprised in a sensor system 130 of the direct internal cooling system 100 or be a part of the sensor system of the EM in communication with the control system 100. In several embodiments, the control system 100 may further comprise processing circuitry 11 configured for controlling operation of the external cooling means for delivery of the coolant to the one or more internal EM components via the coolant channels and the air inlet vents. The processing circuitry in several embodiments may be configured to obtain sensor data from the sensor system 130 e.g. temperature sensor data from the temperature sensor, control actuation and operation of the external cooling fan 101, and/or the actuation and operation of the water injection module 103. In several embodiment, the processing circuitry 11 may further be configured to obtain sensor data, from the temperature sensor device and/or from one or more other sensor devices (e.g. secondary sensor devices measuring current, voltage, power, etc.) comprised in the sensor system 130 or comprised in the EM. The obtain sensor data may be indicative of an operational temperature of the one or more internal parts of the EM. For instance, the amount of power or current demand and usage by the EM e.g. in the rotor of the EM may be measured by the respective sensor devices. The sensor data may thus be indicative of the operational status of the EM e.g. a high power or current may indicate a heavy-duty cycle. This data can be correlated with operational temperature of the internal parts of the EM and utilized for delivering the required cooling by the direct internal cooling system 100. In some embodiments, the combination of the correlated sensor data obtained from the secondary sensor devices with the temperature sensor data obtained from the temperature sensor of the EM may be utilized. In various embodiments, the processing circuitry 11 may be further configured to determine, based on the obtained sensor data, if the operational temperature of the one or more internal parts of the EM exceeds a first or second temperature threshold value. In response to determining that the operational temperature of the one or more internal parts of the EM has exceeded the first or second temperature threshold value, the processing circuitry may transmit a control signal to the external cooling means for adjusting an operation of the external cooling means by actuating a corresponding component of the external cooling means. In other words, the processing circuitry may determine if the first temperature threshold value has been reached e.g. an internal temperature of 60, 70, 80, 90, 95 degrees centigrade, then an air cooling may suffice. Thus, the rotational speed, torque and/or power levels of the external cooling fan 101 may be adjusted and the fan be actuated accordingly for delivering the adequate cooling airflow into the coolant pathways 21. However, in other operational conditions such as heavy-duty operational cycles, the water mist 31 may also be needed for achieving the proper internal temperatures. Accordingly, when the processing circuitry determines that a second temperature threshold value has been reached e.g. an internal temperature of 100 degrees centigrade or above e.g. 101 , 102, 105, 110, 120, 130 degrees, etc. a control signal may be transmitted to the water injector module 103 for actuating the external water injector module 103. It should be noted that the second temperature threshold value may be a predetermined value or may be dynamically adjusted based on the operation of the EM. Therefore, it is conceivable that even if the predetermined second temperature threshold value is set to 100 degrees, based on the overall operational conditions of the EM 1, the processing circuitry may actuate the water injector module 103 already at a dynamically calculated second temperature threshold value e.g. at 95 degrees in order to effectively regulate the internal temperature.

The second temperature threshold value may be higher than the first temperature threshold value. The external water injector module 103 may thus be activated to inject the cooling water mist 31 directly into the cooling airflow 30 in response to determining that the operational temperature of the one or more internal parts of the EM has exceeded the second temperature threshold value. The processing circuitry 11 may further be configured to monitor the internal temperature of the EM components as mentioned earlier and adjust the amount, volume and duration of the cooling water mist 31 to be produced by the external water injector module 103. In some embodiments, in response to determining that the internal temperature of the EM components has fallen below the second temperature threshold value e.g. to an operational temperature value of 90 degrees, the external water injector module 103 may receive a control signal indicating a deactivation or reduction of water mist delivery volume or duration accordingly. An advantage of regulating operation of the external water injector module 103 and utilizing it in relatively high operational temperatures is that at such example operational temperatures where water aerosol is delivered into the inner parts of the EM, the risk for water accumulation inside the motor 1 is eliminated since no moisture or humidity is remained inside the motor. Due to rapid evaporation of water, a large extent of heat is dissipated, and further no water vapour or dampness is remained on the internal surfaces thus minimizing the risk of corrosion and damages to the EM. It should be clear that several other examples for regulating the internal temperature of the EM components, other than the examples mentioned above, by steering operation of the external cooling fan 101 and the external water injector module 103 based on the determined internal temperature of the EM components are conceivable.

In several embodiments, the EM may be an automotive EM comprised in a vehicle (not specifically shown) such as an EV as mentioned earlier. The EM may be a high-performance automotive electric traction motor. In several embodiments, cooling air is extracted from the external environment e.g. outside of the vehicle. The external cooling fan 101 is dimensioned to be able to deliver the cooling air from the outside environment to the internal parts of the EM and advantageously achieve the cooling/temperature regulation effects. However, in some embodiments, the cooling system 100 may be further configured to replenish cooling air or cooling water by recovering and/or recycling the cooling air or the cooling water from a climate system infrastructure of the vehicle comprising the EM. Thus, the fan may be operational with chilled air provided by an air conditioning (AC) system of the vehicle e.g. from the battery cooling compartment or vehicle cabin AC. The chilled air from the AC system is delivered to the cooling system 100 instead of exhausting the cooled air to the surroundings of the vehicle, by directing it to the external cooling fan 101 and reusing the chilled air for regulating the operational temperature of the EM. An advantage may be achieved in this way by reducing the size of the cooling fan 101 even further.

The cooling system may further comprise a designated water container 105 for storing the replenished cooling water. Alternatively or additionally, the water container 105 may be filled with fresh water by the user of the vehicle. In several embodiments, the replenished water may be collected from the water condensation in the climate system drainage of the vehicle and reused for EM temperature regulation instead of being expelled to the external environment of the vehicle. In several embodiments, the cooling water for producing the cooling water mist may be deionized water, which may be provided by the condensed water in the AC drainage. Advantage is achieved by using deionized water for avoiding deposition and build-up of mineral layers such as calcite layers on internal surfaces and components of the EM and the cooling pathways 21.

The advantageous and effective air-cooling system 100 according to the present disclosure makes the vehicle lighter because the crucial components of the traditional cooling systems such as pumps, hoses, filters, sealing, and heat exchanger components are almost entirely eliminated. Moreover, by having a direct winding cooling system, the size of the motor can be further reduced, and thus, even when a conventional rare-earth IPM machine is used, the amount of magnet material in the EM is noticeably decreased. This way a higher degree of sustainability can be achieved for the high-performance electric traction motors of the EVs.

In several embodiments, the vehicle may comprise a control apparatus 10, which may in turn comprise the direct internal cooling system 100 configured for controlling operation of the external cooling means. As used herein, a "vehicle" is any form of motorized transport. For example, the vehicle may be any road vehicle such as a car (as illustrated herein), a motorcycle, a (cargo) truck, a bus, etc. The vehicle may be an electrical vehicle (EV) or a hybrid vehicle equipped with a cooling system. In several embodiments, the direct internal cooling system 100 and/or the control system 100 may further comprise a memory 12. The processing circuitry may comprise one or more processors which may be configured to execute program code stored in the memory, in order to carry out various functions and operations of the cooling system 100 in addition to the methods disclosed herein. The processor(s) may be or include any number of hardware components for conducting data or signal processing or for executing computer code stored in the memory. The memory optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory may include database components, object code components, script components, or any other type of information structure for supporting the various activities of the present description. Various aspects and embodiments of the presented technology, and the corresponding systems and methods may be implemented and executed by means of processing circuitry comprising one or more processors. The processing circuitry may at least partly be comprised in the control apparatus implemented in the vehicle. In some embodiments, the control system and processing circuitry may be a decentralized system and be implemented in the remote server 15 in communication with the control system 100 or the control apparatus 10 of the vehicle.

In several aspects and embodiments as shown in the exemplary EM 1 of Fig. 1c and Fig. 2, the direct internal cooling system 100 may further comprise a divider unit 107, wherein the divider unit may at least be configured for guiding the coolant flow 30, 32 into the one or more inlet air vents 22 and coolant pathways 21. In several embodiments, the divider unit 107 may be comprised as a part of the external cooling means. The divider unit 107 may be arranged at the end portion of the stator unit 2 coinciding with an end portion 2e of stator windings 2d of the stator unit 2 protruding from the end portion of the stator unit 2 (i.e. from the opening 2f of the stator unit 2). In several embodiments, the divider unit 107, may be an air divider unit configured for guiding the cooling airflow 30, or the aerosol flow 32 into the EM. Alternatively in some embodiments, the divider 107 may be arranged and attached to an internal portion (not specifically shown) of the housing 5 such that it is proximal to the coolant inlet vents 22 for enabling guidance of the coolant flow into the coolant pathways 21. In several embodiments, the divider unit 107 may be a ring-shaped divider unit 107 arranged circumferentially around the end potion 2e of stator windings of the stator unit 2. It should be appreciated that alternatively, the divider unit 107 may have a semi-circular or half-ringed shape extending around a portion of the end potion 2e of stator windings of the stator unit 2.

In several embodiments, the divider unit 107 e.g. the ring-shaped divider unit 107 may comprise one or more apertures 107a. The apertures may be arranged around a circumference of the ring-shaped divider unit 107 and be configured for allowing passage of a portion 30b, 32b of the coolant flow 30, 32 through the one or more apertures of the ring-shaped divider unit. An advantage is provided herein that the end potion 2e of stator windings of the stator unit 2 coinciding with the divider unit 107 can be effectively cooled by the portion of the coolant passing through the apertures 107a of the divider unit 107. Clearly, the divider unit 107 having another shape than the full ring-shape can also be provided with the one or more apertures 107a. In several embodiments, the divider unit 107 may be constructed from any suitable material such as thin metal sheets, or plastic, etc.

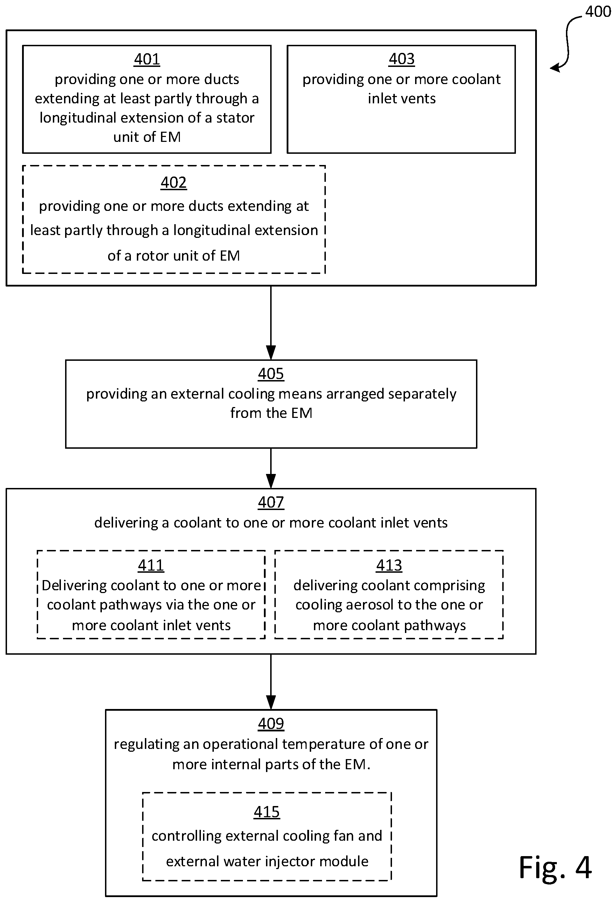

According to several embodiments aspects herein, there is provided a method **400** for direct internal cooling of an electric machine, EM 1. The method comprises regulating an internal operational temperature of one or more internal components of the EM. The EM comprises a housing 5 and a stator unit 2 and a rotor unit 3 arranged therein and supported by the housing. Fig. 4 shows a flowchart of the method **400** according to various aspects and embodiments of the present disclosure and with reference to the technology presented in Figs. 1-3. The method **400** comprises providing **401** one or more ducts 21 extending at least partly through a longitudinal extension 1a of the stator unit 2 in order to create one or more corresponding coolant pathways 21 that traverse the longitudinal extension of the stator unit. The one or more coolant pathways 21 are configured to be in direct thermal communication with one or more internal parts of the EM 1. In some embodiments, the method **400** may further comprise providing **402** one or more ducts extending at least partly through a longitudinal extension of a rotor unit 2 of the EM 1 in order to create one or more corresponding coolant pathways (not specifically shown) that traverse the longitudinal extension of the rotor unit. The method **400** further comprises providing **403** one or more coolant inlet vents 22 at a surface of an end portion 2a of the stator unit, wherein each coolant inlet vent is associated with a respective coolant pathway 21. The method **400** further comprises providing **405** an external cooling means arranged separately from the EM and proximal to the housing 5 of the EM. The method **400** further comprises delivering **407,** by means of the external cooling means, a coolant comprising a cooling airflow to the one or more coolant pathways via corresponding one or more coolant inlet vents. Further, the method **400** comprises regulating **409** an operational temperature of one or more internal parts of the EM. The external cooling means comprises one or more components comprising an external cooling fan 101 and an external water injector module 103. The external water injector module may be arranged separately from and proximal to the housing of the EM and the external cooling fan. In several exemplary embodiments, the method may comprise arranging the external water injector module separately from and proximal to the housing of the EM and the external cooling fan. The method may further comprise extracting, by means of the cooling fan, cooling air from an external environment located remotely from the immediate vicinity of the EM for delivering the cooling airflow to the one or more coolant pathways via corresponding one or more coolant inlet vents. The method may further comprise injecting, by means of the external water injector, a cooling water mist directly into the cooling airflow provided by the external cooling fan. The method may further comprise mixing the cooling airflow with the injected water mist for producing a cooling aerosol prior to entering into the one or more coolant inlet vents. The method may further comprise delivering, by means of the external cooling fan, the coolant comprising the cooling aerosol to the one or more respective coolant pathways via the one or more respective coolant inlet vents.

As mentioned earlier, the cooling fan may be configured for extracting cooling air from an external environment located remotely from the immediate vicinity of the EM. The cooling fan may be further configured for delivering the cooling airflow to the one or more coolant pathways via corresponding one or more coolant inlet vents. In several aspects and embodiments, the method **400** may further comprise delivering **411** the cooling airflow 30 to the one or more respective coolant pathways 21 via the one or more respective coolant inlet vents 22. The external water injector module may be configured to inject a cooling water mist directly into the cooling airflow provided by the external cooling fan. According to embodiments herein, the cooling airflow is mixed, prior to entering into the one or more coolant inlet vents, with the injected water mist for producing a cooling aerosol. The external cooling fan may further be configured for delivering the coolant comprising the cooling aerosol to the one or more respective coolant pathways via the one or more respective coolant inlet vents. In several aspects and embodiments, the method **400** may further comprise delivering **413** the coolant comprising the cooling aerosol 32 to the one or more respective coolant pathways 21 via the one or more respective coolant inlet vents 22. Thus, the method **400** may comprise regulating **409** the operational temperature of one or more internal parts of the EM by means of controlling **415** the external cooling fan 101 and the external water injector module 103.

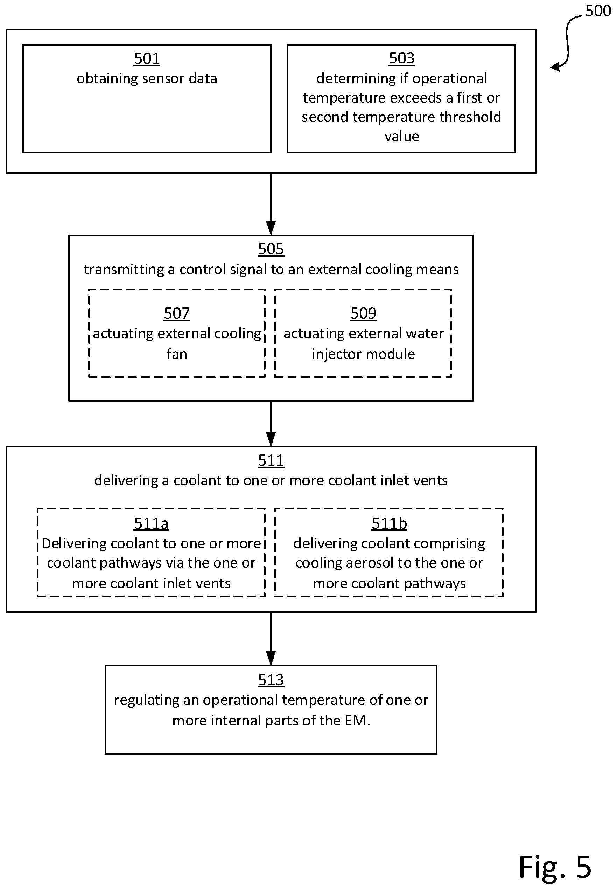

According to several embodiments aspects herein, there is provided a computer-implemented method **500** of controlling an operation of a direct internal cooling system 100 of an electric machine, EM configured for direct internal cooling and regulating the operational temperature of one or more internal parts of the EM 1. The EM 1 is explained in detail with respect to Figs. 1-3 and comprises a housing 5 and a stator unit 2 and a rotor unit 3 arranged therein and supported by the housing. The direct internal cooling system 100 comprises an external cooling means arranged separately from the EM and proximal to the housing of the EM and configured for regulating an operational temperature of one or more internal parts of the EM. Fig. 5 shows a flowchart of the method **500** according to various aspects and embodiments of the present disclosure and with reference to the technology presented in Figs. 1-4. The method **500** comprises obtaining **501** sensor data from one or more sensor devices, the sensor data being indicative of an operational temperature of the one or more internal parts of the EM. The method **500** further comprises determining **503,** based on the obtained sensor data, if the operational temperature exceeds a first or second temperature threshold value. In response to determining that the operational temperature of the one or more internal parts of the EM has exceeded the first or second temperature threshold value, the method **500** further comprises transmitting **505** a control signal to the external cooling means for adjusting an operation of the external cooling means by actuating a corresponding component of the external cooling means. In several aspects and embodiments as previously mentioned, the external cooling means comprises one or more components comprising the external cooling fan 101 and the external water injector module 103. In several embodiments, in response to determining that the operational temperature of the one or more internal parts of the EM has exceeded the first temperature threshold value, the method **500** may further comprise actuating **507** the external cooling fan 101 for delivering a coolant comprising a cooling airflow to one or more coolant pathways comprised in the stator unit. The coolant channels are configured to be in direct thermal communication with one or more internal parts of the EM. In several embodiments, in response to determining that the operational temperature of the one or more internal parts of the EM has exceeded the second temperature threshold value, the method **500** may further comprise actuating **509** the external water injector module 103 to inject a cooling water mist 31 directly into the cooling airflow 30 provided by the external cooling fan in order to create a flow of an aerosol 32. The method **500** may further comprise delivering **511a, 511b** the coolant comprising the cooling airflow 30 and/or cooling aerosol 32 to the one or more respective coolant pathways 21 via the one or more respective coolant inlet vents 22. The method **500** may further comprise regulating **513** the operational temperature of one or more internal parts of the EM by means of controlling the external cooling fan 101 and the external water injector module 103.

In several aspects and embodiments of the present disclosure, there is provided a vehicle 1 comprising the direct internal cooling system 100 according to several aspects and embodiments described herein and the electric machine, EM, according to several aspects and embodiments described herein with reference to Figs. 1- 5.

Executable instructions for performing these functions and embodiments of the methods **500** are, optionally, included in a non-transitory computer-readable storage medium or other computer program product configured for execution by one or more processors e.g. one or more processors comprised in the direct internal cooling system 100 or in the control apparatus 10 of the vehicle 1. In several aspects, embodiments and implementations, some of the embodiments of the method 500 may be at least partly implemented as a part of the method 400 presented herein.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The different features and steps of the embodiments may be combined in other combinations than those described. It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A direct internal cooling system for an electric machine, EM, the EM comprising:
a housing and a stator unit and a rotor unit arranged therein and supported by the housing;
wherein the stator comprises one or more ducts extending at least partly through a longitudinal extension of the stator unit in order to create one or more corresponding coolant pathways that traverse the longitudinal extension of the stator unit;
wherein the one or more coolant pathways are configured to be in direct thermal communication with one or more internal parts of the EM;
one or more coolant inlet vents arranged at a surface of an end portion of the stator unit; wherein each coolant inlet vent is associated with a respective coolant pathway;
wherein the direct internal cooling system comprises:
an external cooling means configured for regulating an operational temperature of the one or more internal parts of the EM;
wherein the external cooling means is arranged separately from the EM and proximal to the housing of the EM, and is further configured for delivering a coolant comprising a cooling airflow to the one or more coolant pathways via corresponding one or more coolant inlet vents;
thereby regulating the operational temperature of the one or more internal parts of the EM.

2. The direct internal cooling system according to claim 1, wherein the direct internal cooling system further comprises:
a divider unit arranged at the end portion of the stator unit coinciding with an end portion of stator windings of the stator unit protruding from the end portion of the stator unit; wherein the divider unit is configured for guiding the coolant into the one or more inlet air vents.

3. The direct internal cooling system according to claim 2, wherein the divider unit is a ring-shaped divider unit arranged circumferentially around the end potion of stator windings of the stator unit, and
wherein the ring-shaped divider unit comprises one or more apertures arranged around a circumference of the ring-shaped divider unit configured for allowing passage of a portion of the coolant through the one or more apertures of the ring-shaped divider unit.

4. The direct internal cooling system according to any one of claims 1-3, wherein the external cooling means comprises one or more components comprising:
an external cooling fan and an external water injector module, the external water injector module arranged separately from and proximal to the housing of the EM and the external cooling fan,
wherein the cooling fan is configured for extracting cooling air from an external environment located remotely from the immediate vicinity of the EM for delivering the cooling airflow to the one or more respective coolant pathways; and
wherein the external water injector module is configured to:
inject a cooling water mist directly into the cooling airflow provided by the external cooling fan, such that the cooling airflow is mixed, prior to entering into the one or more coolant inlet vents, with the injected water mist for producing a cooling aerosol;
wherein the external cooling fan is further configured for delivering the coolant comprising the cooling aerosol to the one or more respective coolant pathways via the one or more respective coolant inlet vents.

5. The direct internal cooling system according to claim 4, wherein the cooling system further comprises a designated water container for storing cooling water and wherein cooling water for producing the cooling water mist is deionized water.

6. The direct internal cooling system according to any one of preceding claims, wherein the system further comprises a temperature sensor device configured to obtain one or more internal temperature measurements of the one or more internal parts of the EM; and
processing circuitry configured for controlling operation of the external cooling means for delivery of the coolant to the one or more air inlet vents.

7. The direct internal cooling system according to claim 6, wherein the processing circuitry is further configured to:
obtain sensor data, from the temperature sensor device and/or from one or more other sensor devices comprised in the EM, indicative of an operational temperature of the one or more internal parts of the EM; and
determine, based on the obtained sensor data, if the operational temperature of the one or more internal parts of the EM exceeds a first or second temperature threshold value; and
in response to determining that the operational temperature of the one or more internal parts of the EM has exceeded the first or second temperature threshold value:
transmit a control signal to the external cooling means for adjusting an operation of the external cooling means by actuating a corresponding component of the external cooling means.

8. The direct internal cooling system according to claim 7, wherein the processing circuitry is further configured to actuate the external water injector module to inject the cooling water mist directly into the cooling airflow in response to determining that the operational temperature of the one or more internal parts of the EM has exceeded the second temperature threshold value.

9. A method for direct internal cooling of an electric machine, EM, the EM comprising a housing and a stator unit and a rotor unit arranged therein and supported by the housing; wherein the method comprises:
providing one or more ducts extending at least partly through a longitudinal extension of the stator unit in order to create one or more corresponding coolant pathways that traverse the longitudinal extension of the stator unit, wherein the one or more coolant pathways are configured to be in direct thermal communication with one or more internal parts of the EM;
providing one or more coolant inlet vents at a surface of an end portion of the stator unit; wherein each coolant inlet vent is associated with a respective coolant pathway;
providing an external cooling means arranged separately from the EM and proximal to the housing of the EM;
delivering, by means of the external cooling means, a coolant comprising a cooling airflow to the one or more coolant pathways via corresponding one or more coolant inlet vents;
regulating an operational temperature of one or more internal parts of the EM.

10. The method according to claim 9, wherein the external cooling means comprises one or more components comprising:
an external cooling fan and an external water injector module, wherein the method further comprises:
arranging the external water injector module separately from and proximal to the housing of the EM and the external cooling fan;
extracting, by means of the cooling fan, cooling air from an external environment located remotely from the immediate vicinity of the EM for delivering the cooling airflow to the one or more coolant pathways via corresponding one or more coolant inlet vents;
injecting, by means of the external water injector, a cooling water mist directly into the cooling airflow provided by the external cooling fan;
mixing the cooling airflow, prior to entering into the one or more coolant inlet vents, with the injected water mist for producing a cooling aerosol;
delivering, by means of the external cooling fan, the coolant comprising the cooling aerosol to the one or more respective coolant pathways via the one or more respective coolant inlet vents.

11. A computer-implemented method of controlling an operation of a direct internal cooling system of electric machine, EM, the EM comprising a housing and a stator unit and a rotor unit arranged therein and supported by the housing; the direct internal cooling system comprising an external cooling means arranged separately from the EM and proximal to the housing of the EM and configured for regulating an operational temperature of one or more internal parts of the EM, wherein the method comprises:
obtaining sensor data from one or more sensor devices, the sensor data being indicative of an operational temperature of the one or more internal parts of the EM;
determining, based on the obtained sensor data, if the operational temperature exceeds a first or second temperature threshold value; and
in response to determining that the operational temperature of the one or more internal parts of the EM has exceeded the first or second temperature threshold value:
transmitting a control signal to the external cooling means for adjusting an operation of the external cooling means by actuating a corresponding component of the external cooling means.

12. The method according to claim 11, wherein the external cooling means comprises one or more components comprising an external cooling fan and an external water injector module, wherein the method further comprises:
in response to determining that the operational temperature of the one or more internal parts of the EM has exceeded the first temperature threshold value:
actuating the external cooling fan for delivering a coolant comprising a cooling airflow to one or more coolant pathways comprised in the stator unit and configured to be in direct thermal communication with one or more internal parts of the EM.

13. The method according to any one of claims 11 or 12, wherein the method further comprises:
in response to determining that the operational temperature of the one or more internal parts of the EM has exceeded the second temperature threshold value:
actuating the external water injector module to inject a cooling water mist directly into the cooling airflow provided by the external cooling fan.

14. A computer-readable storage medium comprising instructions which, when executed by one or more processors of a computing device of a direct internal cooling system, causes the computing device to carry out the method according to any one of claims 11- 13.

15. A computer program product comprising instructions which, when the program is executed by one or more processors of a computing device of a direct internal cooling system, causes the computing device to carry out the method according to any one of claims 11- 13.

16. An electric machine, EM, comprising a housing and a stator unit and a rotor unit arranged therein and supported by the housing;
wherein the stator comprises one or more ducts extending at least partly through a longitudinal extension of the stator unit in order to create one or more corresponding coolant pathways that traverse the longitudinal extension of the stator unit;
wherein the one or more coolant pathways are configured to be in direct thermal communication with one or more internal parts of the EM; and wherein the stator unit further comprises:
one or more coolant inlet vents arranged at a surface of an end portion of the stator unit; wherein each coolant inlet vent is associated with a respective coolant pathway;
wherein the one or more coolant pathways are further configured for receiving a coolant comprising a cooling airflow delivered to the one or more coolant pathways via corresponding one or more coolant inlet vents.

17. The electric machine, EM, according to claim 16, wherein at least one duct of the one or more ducts extending at least partly through the longitudinal extension of the stator unit further comprises a plurality of fins arranged thereto, wherein the plurality of fins are configured for providing conductive heat transfer.

18. The electric machine, EM, according to any one of claims 16 or 17, wherein the rotor unit comprises one or more ducts extending at least partly through a longitudinal extension of the rotor unit in order to create one or more corresponding coolant pathways that traverse the longitudinal extension of the rotor unit;
wherein the one or more coolant pathways of the rotor unit are configured to be in direct thermal communication with the one or more internal parts of the EM.

19. A vehicle comprising a direct internal cooling system according to any one of claims 1- 8 and a electric machine, EM, according to any one of claims 16 - 18.
